# EUROPEAN PATENT APPLICATION

(11) **EP 2 716 150 A1**
(43) Date of publication of application: **09.04.2014**
(21) Application number: 13004791.3
(22) Date of filing: 04.10.2013
(51) Int. Cl.: A01D 34/84

(54) **Power tool**

(30) Priority: 05.10.2012 JP 2012222915
(71) Applicant: Makita Corporation, Anjo-shi, Aichi 446-8502 (JP)
(72) Inventor: Hirabayashi, Shinji, Aichi 446-8502 (JP); Ichikawa, Yoshitaka, Aichi 446-8502 (JP)
(74) Representative: Müller-Boré & Partner Patentanwälte PartG mbB

(57) **Abstract**

A brush cutter (1) as a power tool comprises an combustion engine (311), an electric motor (341), a gear head (4) which drives a blade (5), a battery pack (337) which provides electric current to the electric motor (341) and a controller (339) which controls a driving of the blade (5) . An output shaft of the combustion engine (311) and an output shaft of the electric motor (341) are arranged coaxially to each other. Further, the combustion engine (311) drives the gear head (4) and thereby the blade (5) is driven. The controller (339) has a first control mode in which the blade (5) is driven and a second control mode in which the battery pack (337) is charged. In the second control mode, the controller (339) controls the combustion engine (311) so that the combustion engine (311) drives the electric motor (341) as a generator without driving the blade (5), and the battery pack (337) is charged by the generator.

## Description

### Introduction:

The invention relates to a power tool which drives a tool and performs a predetermined operation.

### Description of the Related Art:

Japanese Laid-Open Patent Application Publication No. 2011-244724 discloses a brush cutter which has an engine and a motor. The brush cutter drives a blade by means of the engine or the motor respectively by switching the engine and the motor which are provided as driving sources.

### Statement of Invention:

In the brush cutter described above, the engine and the motor which are provided as driving sources are driven independently to each other. That is, when one driving source is driven, the other driving source stops driving operation. Accordingly, for a user of such brush cutter, when one driving source is driven, the other driving source is unnecessary in terms of an operation against a workpiece.

An object of the invention is, in consideration of the above described problem, to rationalize a driving of a power tool which has an engine and a motor.

Above-mentioned object is achieved by an invention of claim 1. According to a preferable aspect of the invention, a power tool which drives a tool bit is provided. The power tool comprises an engine, a motor, a driving shaft which drives the tool bit, a controller which controls a driving of the tool bit, and a battery which provides electric current to the motor. The tool bit is typically defined by a tool such as a hammer bit, a drill bit, a blade, a saw chain and so on, which is detachably attached to the power tool and the attached tool performs a predetermined operation on a workpiece. An output shaft of the engine and an output shaft of the motor are arranged coaxially to each other. Further, the controller has a first control mode in which the tool bit is driven, and a second control mode in which the battery is charged. In the second control mode, the controller controls the engine so that the engine drives the generator without driving the tool bit, and the battery is charged by the generator. On the other hand, in the first control mode, the engine drives the driving shaft so that the driving shaft drives the tool bit. In this aspect, the motor preferably includes a driving motor which drives the driving shaft and/or a starter motor which starts the engine. Further, the tool bit may be driven by both the engine and the motor. Typically, the engine is represented by a combustion engine, and the motor is represented by an electric motor.

According to this aspect, in the second control mode, the engine is driven for charging the battery without driving the tool bit. That is, a specialized control mode for charging the battery is provided. Accordingly, when a remaining capacity of the battery becomes low, the battery is charged in the second control mode. As the battery is charged, the motor is able to be driven again. Especially, this aspect is useful for a power tool in which both the engine and the motor drive the driving shaft so that the driving shaft drives the tool bit. Accordingly, a rational driving of the power tool is achieved.

A further aspect may be preferably provided as in the second control mode, the motor functions as the generator. Further, the engine drives the motor, and the battery is charged by the motor functioning as the generator.

According to this aspect, the motor is also utilized as a generator. That is, the motor is utilized as both a driving motor and a generator. Therefore, a generator other than the motor is not needed to provide to the power tool. Accordingly, the power tool is downsized.

A further aspect may be preferably provided as the power tool comprises a switching member which switches between the first control mode and the second control mode. Further, the switching member is manually operated by a user.

According to this aspect, a user can select a control mode from the first control mode and the second control mode by means of the switching member, and there by the power tool is driven in the selected control mode.

A further aspect may be preferably provided as the switching member which changes a driving state of the engine.

According to this aspect, the driving state of the engine is changed by the switching member which switches the control mode. That is, it is not necessary to provide a plurality of switching members. In this aspect, "changing a driving state of the engine" means that, for example, changing an amount of inlet air to the engine by a choke lever, changing a timing of firing the engine by the controller, and/or changing an amount of fuel provided to the engine.

A further aspect may be preferably provided as the power tool comprises an operated member which is manually operated to drive the tool bit by a user. Further, in the second control mode, when the operated member is operated, the driving of the engine is stopped.

According to this aspect, during the period in which the second control mode is selected, when the operated member is operated due to a user' s operation error, the driving of the engine is stopped. That is, an inadvertent driving of the tool bit due to the user' s operation error is prevented. Accordingly, a safety of a user is ensured.

A further aspect may be preferably provided as in the second control mode, the controller controls a rotation speed of the engine based on a remaining capacity of the battery.

According to this aspect, the controller controls the rotation speed of the engine, and thereby a charging optimization of the battery is achieved. Accordingly, a provision of overcurrent to the battery and/or an overcharge of the battery are prevented.

A further aspect may be preferably provided as in the second control mode, when a remaining capacity of the battery is not less than a predetermined threshold, the controller stops the driving of the engine.

According to this aspect, when the remaining capacity of the battery is not less than the predetermined threshold, charging of the battery is stopped. Therefore, for example, when the battery is fully charged, an overcharge of the battery is prevented.

A further aspect may be preferably provided as the power tool comprises an informing mechanism which informs that the second control mode is selected and/or a remaining capacity of the battery is not less than a predetermined threshold.

According to this aspect, the informing mechanism can inform that the engine is driven for charging the battery. Further, the informing mechanism informs that the remaining capacity of the battery is not less than the predetermined threshold, and thereby the informing mechanism can inform that the motor is able to be driven by means of the battery.

A further aspect may be preferably provided as the first control mode includes a hybrid driving mode in which both the engine and the motor drive the driving shaft, and an engine driving mode in which only the engine drives the driving shaft. Further, in the first control mode, the hybrid driving mode and the engine driving mode are selectively switched and the tool bit is driven in the selected driving mode.

According to the invention, a rational driving of a power tool which has an engine and a motor is achieved.
Other objects, features and advantages of the invention will be readily understood after reading the following detailed description together with the accompanying drawings and the claims.

### Brief Description of the Drawings:

Fig. 1 shows a perspective view of a power tool according to a preferred embodiment.
Fig. 2 shows a cross-sectional view of a main body part of the power tool.
Fig. 3 shows a rear view of the main body part.
Fig. 4 shows the rear view of the main body part in which a switching member is switched from Fig. 3.
Fig. 5 shows a block diagram of a drive system of the power tool.

### Detailed Description of the Invention:

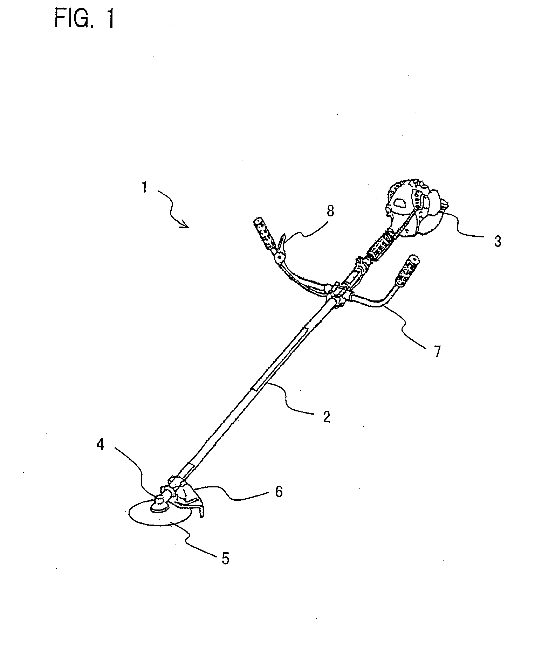

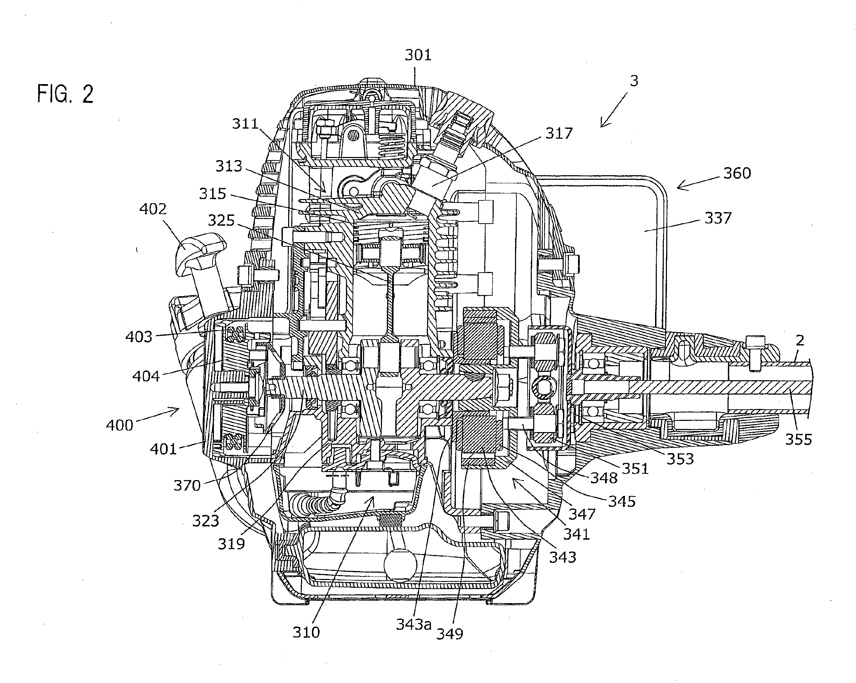

Each of the additional features and method steps disclosed above and below may be utilized separately or in conjunction with other features and method steps to provide and manufacture improved power tools and method for using such the power tools and devices utilized therein. Representative examples of the invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.
An exemplary embodiment is explained with reference to Fig. 1 to Fig. 5. This embodiment is one example of a power tool applied to a brush cutter 1. As shown in Fig. 1, the brush cutter 1 is mainly provided with a control rod 2, a driving unit 3, a gear head 4 and a handle 7. The control rod 2 is a pipe-shaped member in which a driving shaft 355 (see Fig. 2) is arranged. The driving unit 3 is arranged at a rear end region of the control rod 2. The gear head 4 to which the blade 5 is detachably attached is arranged at a front end region of the control rod 2. Further, at the front end region of the control rod 2, a safety cover 6 is arranged so as to partially surround the blade 5. The handle 7 is arranged at an intermediate region of the control rod 2. A throttle lever 8 which is connected to the driving unit 3 is arranged on the handle 7.

As shown in Fig. 2, the driving unit 3 is mainly provided with a main housing 301, a battery holding portion 360 and a recoil starter 400. The main housing 301 forms an outline of the driving unit 3. The battery holding portion 360 is arranged at a front side (right-hand side of Fig. 2) region of the main housing 301, and a battery pack 337 is detachably attached to the battery holding portion 360. The recoil starter 400 is arranged at a rear side (left-hand side of Fig. 2) region of the driving unit 3.

As shown in Fig. 2, a driving mechanism 310 is housed in the main housing 301. The driving mechanism 310 is mainly provided with a combustion engine 311 and an electric motor 341. In the driving mechanism 310, both output power of the combustion engine 311 and the electric motor 341 are transmitted to the gear head 4 via the driving shaft 355. Thus, the blade 5 is driven by the gear head 4. That is, the brush cutter 1 is provided as a hybrid driving power tool in which the blade 5 is driven by two different power sources of the combustion engine 311 and the electric motor 341.

The combustion engine 311 is formed as a reciprocating combustion engine, and mainly provided with a cylinder 313, a piston 315, a spark plug 317, a crank case 319, a crank shaft 319 and a connecting rod 325. The piston 315 is slidably arranged in the cylinder 313. The spark plug 317 is arranged above the piston 315 inside the cylinder 313. The crank case 319 is arranged below the cylinder 313 so as to connect to the cylinder 313. The crank shaft 323 is supported by a bearing inside the crank case 319. The connecting rod 325 is connected to both of the piston 315 and the crank shaft 323. The combustion engine 311 is one example of a feature corresponding to "an engine" of the invention. Further, the crank shaft 323 is one example of a feature corresponding to "an output shaft of the engine" of the invention.

The crank shaft 323 is arranged so as to be parallel to an extending direction (lateral direction of Fig. 2) of the driving shaft 355. The recoil starter 400 is arranged at one side (left side of Fig. 2) region of the crank shaft 323. On the other hand, the electric motor 341 is arranged at the other side (right side of Fig. 2) region of the crank shaft 323.

The electric motor 341 is provided as an outer rotor motor, and arranged coaxially with the crank shaft 323. The electric motor 341 is mainly provided with a stator core 343, a stator coil 345, an outer rotor 347 and a magnet 349. The stator core 343 is a disk-shaped member made of a magnetic material. The stator core 343 is fixed on outer surfaces of the cylinder 313 and the crank case 319 via a sleeve 343a. That is, the crank shaft 323 is inserted into the sleeve 343a, and thereby the crank shaft 323 is rotatably arranged against the fixed stator core 343. The stator coil 345 is wound on the stator core 343, and when electric current is applied, the stator core 343 is excited.

The outer rotor 347 is a cup-shaped member, and fixed on the crank shaft 323 so as to rotate integrally with the crank shaft 323. Accordingly, the outer rotor 347 and the crank shaft 323 are coaxially arranged to each other. The magnet 349 is arranged on an inner surface of the outer rotor 347 so as to face an outer surface of the stator core 343. The outer rotor 347 is connected to a centrifugal clutch 351 via a connecting rod 348, and thereby the outer rotor 347 and the centrifugal clutch 351 are rotated integrally with each other. Further, a clutch drum 353 is arranged outside the centrifugal clutch 351. Accordingly, when the centrifugal clutch 351 is rotated, the centrifugal clutch 351 and the clutch drum 353 are engaged by a centrifugal force, and thereby rotation of the combustion engine 311 and the electric motor 341 is transmitted to the clutch drum 353. That is, when a rotation speed exceeds a predetermined speed, the clutch drum 353 is rotated integrally with the centrifugal clutch 351. Further, the clutch drum 353 is connected to the gear head 4 via the driving shaft 355. Thus, output power of the combustion engine 311 and the electric motor 341 is transmitted to the gear head 4 and the blade 4 is rotated, and thereby a cutting operation to a workpiece is performed. The electric motor 341 is one example of a feature corresponding to "a motor" of the invention. Further, the outer rotor 347 is one example of a feature corresponding to "an output shaft of the motor" of the invention. Further, the gear head 4 is one example of a feature corresponding to "a driving shaft" of the invention.

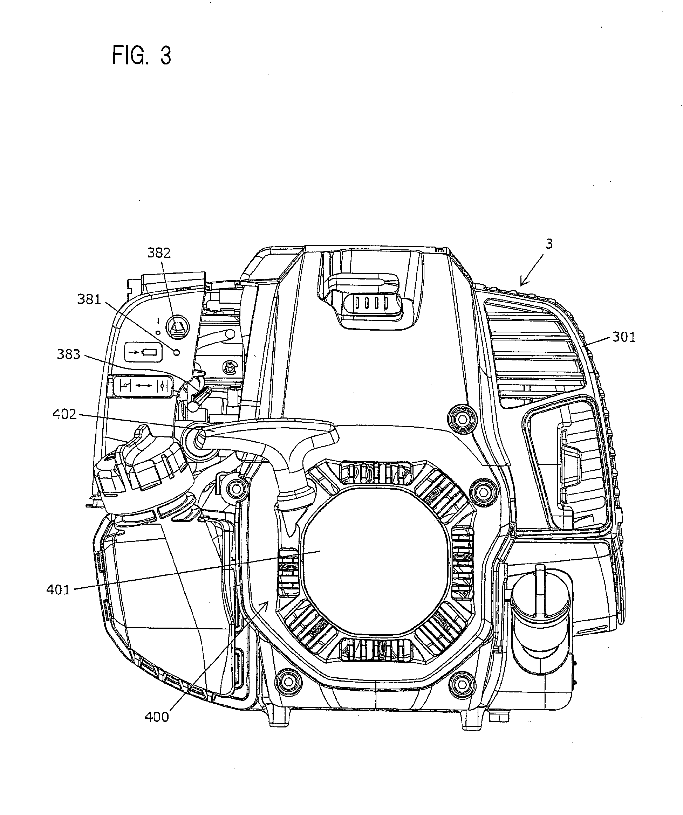

As shown in Fig. 2 and Fig. 3, the recoil starter 400 is mainly provided with a case 401, a recoil starter handle 402, a recoil rope 403 and a rope reel 404. The recoil starter 400 is connected to the crank shaft 323 via a coupling 370. Accordingly, by pulling the recoil rope 403, the crank shaft 323 is rotated and thereby the combustion engine 311 is manually started. For the convenience, detailed explanation of the recoil starter 400 is omitted. In addition to the recoil starter, a starter switch (not shown) is provided to the brush cutter 1. When the starter switch is manipulated, the electric motor 341 is driven as a starter motor, and thereby the combustion engine 311 is started by the starter motor. That is, the combustion engine 311 is started by the recoil starter 400 and the starter switch respectively. Further, as shown in Fig. 3 to Fig. 5, a choke lever 383 adjustable of an amount of inlet air to the combustion engine 311 is provided to the brush cutter 1.

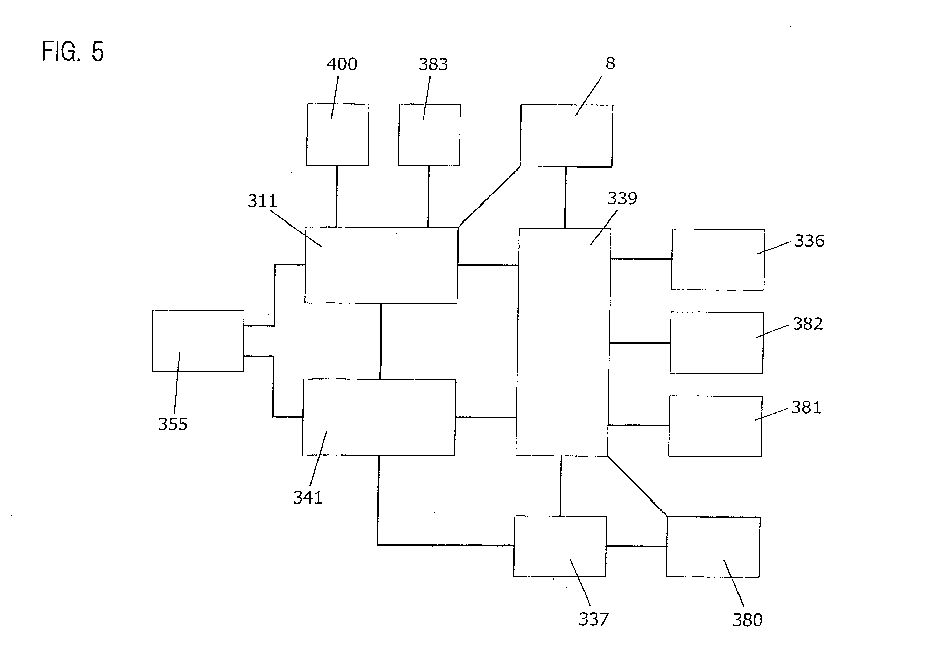

As shown in Fig. 5, the controller 339 is adapted to control the combustion engine 311 and the electric motor 341. The controller 339 is connected to the throttle lever 8, the combustion engine 311, the electric motor 341, a driving mode switching switch 336, the battery pack 337, a sensor 380, a LED (light-emitting diode) 381 and a control mode switching switch 382. The controller 339 is one example of a feature corresponding to "a controller" of the invention.

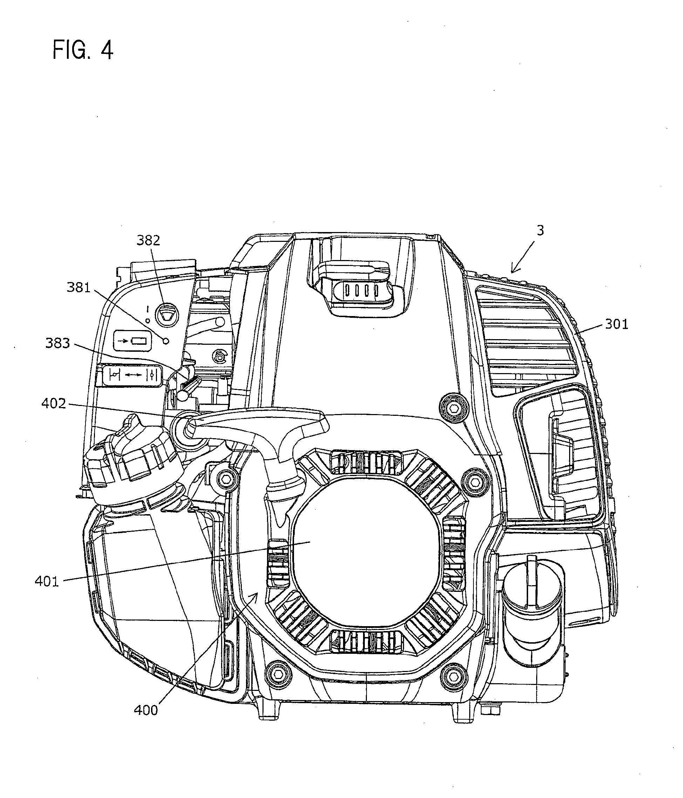

The controller 339 has a first control mode (also called a driving mode) in which the controller 339 controls so that the combustion engine 311 drives the driving shaft 355 and thereby the blade 5 is driven by the driving shaft 355, and a second control mode (also called a charging mode) in which controller 339 controls so that the combustion engine 311 drives the electric motor 341 and thereby the electric motor 341 is functioned as a generator. As shown in Fig. 3 and Fig. 4, the control mode switching switch 382 connected to the controller 339 is manipulated by a user, and thereby the first control mode and the second control mode are switched. The first control mode is selected when the control mode switching switch 382 is positioned at a position depicted in Fig. 3. Further, the second control mode is selected when the control mode switching switch 382 is positioned at a position depicted in Fig. 4. The first control mode and the second control mode are one example of features corresponding to "a first control mode" and "a second control mode" of the invention respectively. Further, the control mode switching switch 382 is one example of a feature corresponding to "a switching member" of the invention.

As shown in Fig. 3, when the first control mode is selected via the control mode switching switch 382, the controller 339 controls so that the combustion engine 311 and/or the electric motor 341 drive the driving shaft 355 based on a mode selected by the driving mode switching switch 336. With respect to a mode selected by the driving mode switching switch 336, in a first driving mode, the blade 5 is driven by both the combustion engine 311 and the electric motor 341, further in a second driving mode, the blade 5 is driven by only the engine combustion 311.

When the first driving mode is selected and the throttle lever 8 is operated, the combustion engine 311 and the electric motor 311 are driven. When a rotation speed of the outer rotor 347 exceeds a predetermined threshold, rotation of the outer rotor 347 is transmitted to the clutch drum 353 via the centrifugal clutch 351. That is, both rotation of the combustion engine 311 and the electric motor 341 are transmitted to the clutch drum 353. Accordingly, the driving shaft 355 is driven by both output power of the combustion engine 311 and the electric motor 341. As a result, the gear head 4 is driven by the driving shaft 355. That is, the brush cutter 1 drives the blade 5 by both the combustion engine 311 and the electric motor 341. The first driving mode is one example of a feature corresponding to "a hybrid driving mode" of the invention.

When the second driving mode is selected and the throttle lever 8 is operated, only the combustion engine 311 is driven. When a rotation speed of the outer rotor 347 connected to the crank shaft 323 exceeds the predetermined threshold, rotation of the crank shaft 323 is transmitted to the clutch drum 353 via the centrifugal clutch 351. Accordingly, the combustion engine 311 drives the driving shaft 355 via the outer rotor 347 and the clutch drum 353. As a result, the gear head 4 is driven by the driving shaft 355. That is, the brush cutter 1 drives the blade 5 by only the combustion engine 311. The throttle lever 8 is one example of a feature corresponding to "an operated member" of the invention. Further, the second driving mode is one example of a feature corresponding to "an engine driving mode" of the invention.

On the other hand, as shown in Fig. 4, when the second control mode is selected via the control mode switching switch 382, the controller 339 controls so that the combustion engine 311 drives the electric motor 341 as a generator. That is, the combustion engine 311 is driven in a low rotation speed in which the combustion engine 311 does not actuate the centrifugal clutch 351. As a result, the outer rotor 347 is rotated and the electric motor 341 is functioned as a generator, however the blade 5 is not driven. Accordingly, electric current is provided to the battery pack 337 from the electric motor 341 as the generator, and thereby the battery pack 337 is charged. Further, when the second control mode is selected, the controller 339 controls so that the LED 381 is turned on.

Further, in the second control mode, the sensor 380 detects voltage of the battery pack 337. In other words, a remaining capacity of the battery 337 is detected by the sensor 380. The controller 339 controls the rotation speed of the combustion engine 331 based on the remaining capacity of the battery pack 337 detected by the sensor 380. That is, controller 339 controls electric current generated by the electric motor 337 as the generator. The controller 339 controls the combustion engine 311 so as to optimize a charging of the battery pack 337, and thereby an overcharge of the battery pack 337 is prevented. Further, overcurrent is prevented from providing to the battery pack 337.

For example, for an optimization of the charging of the battery pack 337, the controller 339 decreases a rotation speed of the combustion engine 311 so as to decrease electric current to the battery pack 337 as the full charge of the battery pack 337 gets closer based on voltage of the battery pack 337 detected by the sensor 380. Further, when the full charge is detected, the controller 339 stops the combustion engine 311.

Further, timing when the controller 339 stops the combustion engine 311 is not limited to when voltage of the full charge is detected. For example, 80 percent of voltage of the full charge may be utilized the timing for stopping the combustion engine 311. The voltage when the controller 339 stops the driving of the combustion engine 311 is one example of a feature corresponding to "a predetermined threshold" of the invention.

Further, the controller 339 keeps the LED 381 turn on after the controller 339 stops the combustion engine 311. Therefore, a state in which the remaining capacity of the battery pack 337 is more than the predetermined threshold is informed to a user. Further, a lighting aspect of the LED 381 may be changed. For example, when the second control mode is selected, the LED 381 may be lightened, and after the controller 339 stops the combustion engine 331, the LED 381 may be flickered. Further, color of light emitted by the LED 381 may be changed as a lighting aspect. The LED 381 is one example of a feature corresponding to "an informing mechanism" of the invention.

As described above, the second control mode is configured as a control mode for charging the battery pack 337. Accordingly, the throttle lever 8 is operated by a user, the controller 339 controls the combustion engine 311 so as to stop the combustion engine 311. That is, when the throttle lever 8 is operated in spite of the second control mode which is configured as the charging mode, the controller 339 judges as an incorrect user operation, and then the controller 339 stops the combustion engine 331. Accordingly, the driving of the brush cutter 1 is stopped and a safety for a user is ensured.

According to this embodiment, in the second control mode, the combustion engine 311 is driven to charge the battery pack 337 without driving the blade 5. That is, a specialized mode for charging the battery pack 337 is provided to the brush cutter 1. Accordingly, in a case that the remaining capacity of the battery pack 337 becomes low, the battery pack 337 is charged by utilizing fuel for driving the combustion engine 311. Since the battery pack 337 is charged, the electric motor 341 can be driven again. That is, the blade 5 is driven by both the combustion engine 311 and the electric motor 341, and further the combustion engine 311 is started by the electric motor 341 and/or the blade 5 is driven by both the combustion engine 311 and the electric motor 341.

Further, according to this embodiment, the first control mode and the second control mode is switched by a manual operation via the control mode switching switch 382. That is, a user is able to select as needed the second control mode as a charging mode.

Further, according to this embodiment, in the second control mode, the electric motor 341 is functioned as a generator. That is, a generator other than the electric motor 341 is not needed to provide to the brush cutter 1, and thereby weight reduction and miniaturization of the brush cutter 1 is achieved. However, in this embodiment, a generator other than the electric motor 341 may be provided to the brush cutter 1.

Further, according to this embodiment, in the second control mode, since the controller 339 controls a rotation speed or the combustion engine 311 based on the remaining capacity of the battery pack 337, an overcharge of the battery pack 337 and/or a provision of overcurrent to the battery pack 337 are prevented.

Further, according to this embodiment, in the first control mode, the blade 5 is driven in one driving mode selected from the first driving mode and the second driving mode. Accordingly, the driving mode is switched by a user based on a load exerted on the blade 5, and thereby output power of the brush cutter 1 is switched. As a result, energy efficiency is improved.

Further, according to this embodiment, since an outer rotor motor is provided as the electric motor 341, relatively large torque is obtained compared with the same size inner rotor motor. That is, distance (radius) of the electric motor 341 from a center of the rotation to a periphery of the outer rotor 347 is lengthened, and thereby the large torque of the electric motor 341 is obtained. As a result, the brush cutter 1 is downsized.

In this embodiment, the outer rotor motor is provided as the electric motor 341, however an inner rotor motor may be provided to the brush cutter 1. Further, the electric motor 341 is functioned as a generator, however a generator other than the electric motor 341 may be provided to the brush cutter 1.

Further, in this embodiment, the centrifugal clutch 351 is arranged between the combustion engine 311 and the electric motor 341, however it is not limited to such aspect. That is, other clutch mechanism such as an electromagnetic clutch may be provided to the brush cutter 1.

Further, in this embodiment, the blade 5 is driven in the first driving mode or in the second driving mode, however it is not limited to such aspect. For example, the brush cutter 1 may have only the first driving mode and may not have the second driving mode. On the other hand, the brush cutter 1 may have only the second driving mode and may not have the first driving mode.

Further, in this embodiment, the LED 381 is provided as an informing mechanism, however it is not limited to such aspect. For example, a speaker which outputs sound or an actuator which generates vibration may be provided instead of the LED 381 to the brush cutter 1.

Further, in this embodiment, the control mode switching switch 382 and the choke lever 383 are disposed separately, however it is not limited to such aspect. For example, the control mode switching switch 382 may have a function of a choke lever. Accordingly, the cost of the brush cutter 1 without the choke lever 383 is decreased.

Further, in this embodiment, the brush cutter 1 is used to explain as one example of a power tool, however other power tool may be applied to the invention. As long as a power tool has an engine and a motor, for example, a chain saw, a hammer drill or a circular saw may be applied.

A correspondence relation between each component of the embodiment and the invention is explained as follows. Further, the embodiment is one example to utilize the invention and the invention is not limited to the embodiment.
The brush cutter 1 corresponds to "a power tool" of the invention.
The gear head 4 corresponds to "a driving shaft" of the invention.
The blade 5 corresponds to "a tool bit" of the invention.
The throttle lever 8 corresponds to "an operated member" of the invention.
The combustion engine 311 corresponds to "an engine" of the invention.
The crank shaft 323 corresponds to "an output shaft of the engine" of the invention.
The battery pack 337 corresponds to "a battery" of the invention.
The controller 339 corresponds to "a controller" of the invention.
The electric motor 341 corresponds to "a motor" of the invention.
The outer rotor 347 corresponds to "an output shaft of the motor" of the invention.
The LED 381 corresponds to "an informing mechanism" of the invention.
The control mode switching switch 382 corresponds to "a switching member" of the invention.

Having regard to an aspect of the invention, following features are provided:
(Feature 1)
   A power tool which drives a tool, comprising:
   an engine,
   a motor,
   a driving shaft capable of driving the tool,
   a controller which controls a driving of the tool, and a battery which provides electric current to the motor,
   wherein at least the engine drives the driving shaft so that the driving shaft drives the tool,
   wherein the controller has a first control mode in which the tool is driven, and a second control mode in which the battery is charged,
   and wherein in the second control mode, the controller controls the engine so that the engine drives a generator without driving the tool, and the battery is charged by the generator.
(Feature 2)
   The power tool according to feature 1, wherein in the first control mode, both the engine and the motor drive the driving shaft so that the driving shaft drives.
(Feature 3)
   The power tool according to feature 1 or 2, wherein in the second control mode, the motor functions as the generator,
   and wherein the engine drives the motor, and the battery is charged by the motor functioning as the generator.
(Feature 4)
   The power tool according to any one of features 1 to 3, wherein an output shaft of the engine and an output shaft of the motor are arranged coaxially to each other.
(Feature 5)
   The power tool according to any one of features 1 to 4, further comprising a clutch mechanism which is arranged between the engine and the driving shaft.
(Feature 6)
   The power tool according to any one of claims 1 to 9 and features 1 to 5, wherein the first control mode includes a hybrid driving mode in which both the engine and the motor drive the driving shaft and an engine driving mode in which only the engine drives the driving shaft,
   and wherein in the first control mode, the hybrid driving mode and the engine driving mode are selectively switched and the tool is driven in the selected driving mode.

### Description of Numerals:

- 1: brush cutter
- 2: control rod
- 3: driving unit
- 4: gear head
- 5: blade
- 6: safety cover
- 7: handle
- 8: throttle lever
- 301: main housing
- 310: driving mechanism
- 311: combustion engine
- 313: cylinder
- 315: piston
- 317: spark plug
- 319: crank case
- 323: crank shaft
- 325: connecting rod
- 336: driving mode switching switch
- 337: battery pack
- 339: controller
- 341: electric motor
- 343: stator core
- 343a: sleeve
- 345: stator coil
- 347: outer rotor
- 348: connecting rod
- 349: magnet
- 351: centrifugal clutch
- 353: clutch drum
- 355: driving shaft
- 360: battery holding portion
- 370: coupling
- 380: sensor
- 381: LED
- 382: control mode switching switch
- 383: choke lever
- 400: recoil starter
- 401: case
- 402: recoil starter handle
- 403: recoil rope
- 404: rope reel

## Claims

1. A power tool which drives a tool bit, comprising:
an engine,
a motor,
a generator,
a driving shaft which drives the tool bit,
a controller which controls a driving of the tool bit, and
a battery which provides electric current to the motor,
wherein an output shaft of the engine and an output shaft of the motor are arranged coaxially to each other,
wherein the controller has a first control mode in which the tool bit is driven, and a second control mode in which the battery is charged,
and wherein in the second control mode, the controller controls the engine so that the engine drives the generator without driving the tool bit, and the battery is charged by the generator.

2. The power tool according to claim 1, wherein in the first control mode, both the engine and the motor drive the driving shaft so that the driving shaft drives the tool bit.

3. The power tool according to claim 1 or 2, wherein in the second control mode, the motor functions as the generator,
and wherein the engine drives the motor, and the battery is charged by the motor functioning as the generator.

4. The power tool according to any one of claims 1 to 3, further comprising a switching member which switches between the first control mode and the second control mode,
wherein the switching member is manually operated by a user.

5. The power tool according to claim 4, wherein the switching member which changes a driving state of the engine.

6. The power tool according to any one of claims 1 to 5, further comprising an operated member which is manually operated to drive the tool bit by a user,
wherein in the second control mode, in a case that the operated member is operated, the driving of the engine is stopped.

7. The power tool according to any one of claims 1 to 6, wherein in the second control mode, the controller controls a rotation speed of the engine based on a remaining capacity of the battery.

8. The power tool according to any one of claims 1 to 7, wherein in the second control mode, in a case that a remaining capacity of the battery is not less than a predetermined threshold, the controller stops the driving of the engine.

9. The power tool according to any one of claims 1 to 8, further comprising an informing mechanism which informs that the second control mode is selected and/or a remaining capacity of the battery is not less than a predetermined threshold.

10. The power tool according to any one of claims 1 to 9, wherein the first control mode includes a hybrid driving mode in which both the engine and the motor drive the driving shaft, and an engine driving mode in which only the engine drives the driving shaft,
and wherein in the first control mode, the hybrid driving mode and the engine driving mode are selectively switched and the tool bit is driven in the selected driving mode.
